**Europäisches Patentamt**

**European Patent Office**

**Office européen des brevets**

(19)

(11) Veröffentlichungsnummer: **0 037 908**
A1

(12) # EUROPÄISCHE PATENTANMELDUNG

(21) Anmeldenummer: **81101877.9**

(51) Int. Cl.³: **G 01 N 25/04**

(22) Anmeldetag: **13.03.81**

(30) Priorität: **09.04.80 DE 3013621**

(43) Veröffentlichungstag der Anmeldung: **21.10.81**
**Patentblatt 81/42**

(84) Benannte Vertragsstaaten: **BE CH DE FR GB IT LI LU NL SE**

(71) Anmelder: **ELECTRO-NITE N.V., Grote Baan 27a, B-3530 Houthalen (BE)**

(72) Erfinder: **Curé, Paul Omer Ivo, Havenlaan 8, Diepenbeek (BE)**

(74) Vertreter: **Radt, Finkener, Ernesti Patentanwälte, Heinrich-König-strasse 119, D-4630 Bochum 1 (DE)**

(54) Verfahren zur Bestimmung des Kohlenstoffgehaltes von Stahlschmelzen durch thermische Analyse.

(57) Bei einem Verfahren zur Bestimmung des Kohlenstoffgehaltes von Stahlschmelzen mittels einer thermischen Analyse durch Ermittlung der Temperatur-Haltepunkte, die beim Abkühlen der Schmelze im Bereich einer Phasenänderung oder Phasentransformation auftreten und in einer Abkühlkurve in Abhängigkeit von der Zeit ausgewertet werden, wobei der Haltepunkt im Zusammenhang mit dem Eisenkohlenstoffdiagramm einem bestimmten Kohlenstoffgehalt entspricht, wird die Temperaturdifferenz zwischen zwei Haltepunkten ermittelt, die bei der Liquidus-Phasenänderung und bei einer Phasentransformation oder bei zwei Phasentransformationen auftreten und die ermittelte Temperaturdifferenz zur Bestimmung des Kohlenstoffgehaltes im Zusammenhang mit dem Eisenkohlenstoffdiagramm benutzt.

EP 0 037 908 A1

ACTORUM AG

## Verfahren zur Bestimmung des Kohlenstoffgehaltes von Stahlschmelzen durch thermische Analyse

Die Erfindung betrifft ein Verfahren zur Bestimmung des Kohlenstoffgehaltes von Stahlschmelzen mittels einer thermischen Analyse durch Ermittlung der Temperatur-Haltepunkte, die beim Abkühlen der Schmelze im Bereich einer Phasenänderung oder Phasentransformation auftreten und in einer Abkühlkurve in Abhängigkeit von der Zeit ausgewertet werden, wobei der Haltepunkt im Zusammenhang mit dem Eisenkohlenstoffdiagramm einem bestimmten Kohlenstoffgehalt entspricht.

Die gebräuchliche Methode zur Bestimmung des Kohlenstoffgehaltes mittels thermischer Analyse besteht darin, den Temperaturverlauf bei der Abkühlung einer Probe in Abhängigkeit von der Zeit zu messen. Je nach der Abkühlungsgeschwindigkeit registriert man dabei beim Unterschreiten der sogenannten Liquiduslinie (Linie AB des Fe-C-Diagramms) einen mehr oder weniger stark ausgeprägten Knick, den sogenannten Temperatur-Haltepunkt, der eine Funktion des C-Gehaltes der Schmelze darstellt, der sich anhand vorliegender Tabellen und Eichkurven ermitteln läßt.

Das bekannte Verfahren benötigt sehr empfindliche und genau geeichte Meßinstrumente, da ein geringer Fehler der absoluten Temperaturmessung einen großen Fehler der Kohlenstoffbestimmung nach sich zieht. Dies ist darauf zurückzuführen, daß die Probe unterkühlt wird und daß durch das Freiwerden der angesammelten Wärme die Kühlgeschwindigkeit herabgesetzt und ein deutlicher Knick verursacht wird.

Der Erfindung liegt die Aufgabe zugrunde, die bekannte Methode zu verbessern und so abzuwandeln, daß genau geeichte Meßinstrumente nicht mehr benötigt werden und trotzdem eine präzise Bestimmung des Kohlenstoffgehaltes möglich ist.

Ausgehend von einem Verfahren der eingangs beschriebenen Art besteht die Erfindung darin, daß die Temperaturdifferenz zwischen zwei Haltepunkten ermittelt wird, die bei der Liquidus-Phasenänderung und bei einer Phasentransformation oder bei zwei Phasentransformationen auftreten und daß die ermittelte Temperaturdifferenz zur Bestimmung des Kohlenstoffgehaltes im Zusammenhang mit dem Eisenkohlenstoffdiagramm benutzt wird.

Im Gegensatz zu dem bekannten Verfahren wird also eine Differenzmessung vorgenommen, d.h. die Abkühlung der Probe erfolgt so, daß noch ein zweiter Haltepunkt durchlaufen wird, wobei der erste Haltepunkt vorzugsweise der Liquidus-Phasenänderung und der zweite einer Phasentransformation entspricht. Die sich auf dem Zeit-Temperatur-Diagramm darstellende Temperaturdifferenz zwischen den beiden Haltepunkten wird gemessen und zur Bestimmung des Kohlenstoffgehaltes herangezogen.

Dadurch ergibt sich für die Praxis ein entscheidender Vorteil dadurch, daß keine absolute Messung der Temperatur erfolgt, wozu sehr empfindliche und genau geeichte Meßinstrumente erforderlich sind, sondern daß es ausschließlich auf die Temperaturdifferenz ankommt, über die eine genaue Bestimmung des Kohlenstoffgehaltes möglich ist.

Theoretisch besteht die Möglichkeit, für die Differenzmessung alle Haltepunkte heranzuziehen, die sich aufgrund des Eisenkohlenstoffdiagramms ergeben und in den Unteransprüchen aufgeführt sind. Bei der praktischen Durchführung des Verfahrens hat es sich als zweckmäßig erwiesen, wenn einer der Haltepunkte der sogenannten Liquidustemperatur, d.h. der Temperatur entspricht, die beim Durchlaufen der Linie AB des Fe-C-Diagramms ermittelt wird.

Das Verfahren wird anhand eines Ausführungsbeispieles und der Zeichnungen erläutert. Es zeigen:

Figur 1   ein Detail des Eisenkohlenstoffdiagramms im Bereich von 0 bis 0,6 % Kohlenstoff,

Figur 2   ein Temperatur-Zeitschaubild und

Figur 3   eine Eichkurve.

Ausführungsbeispiel:

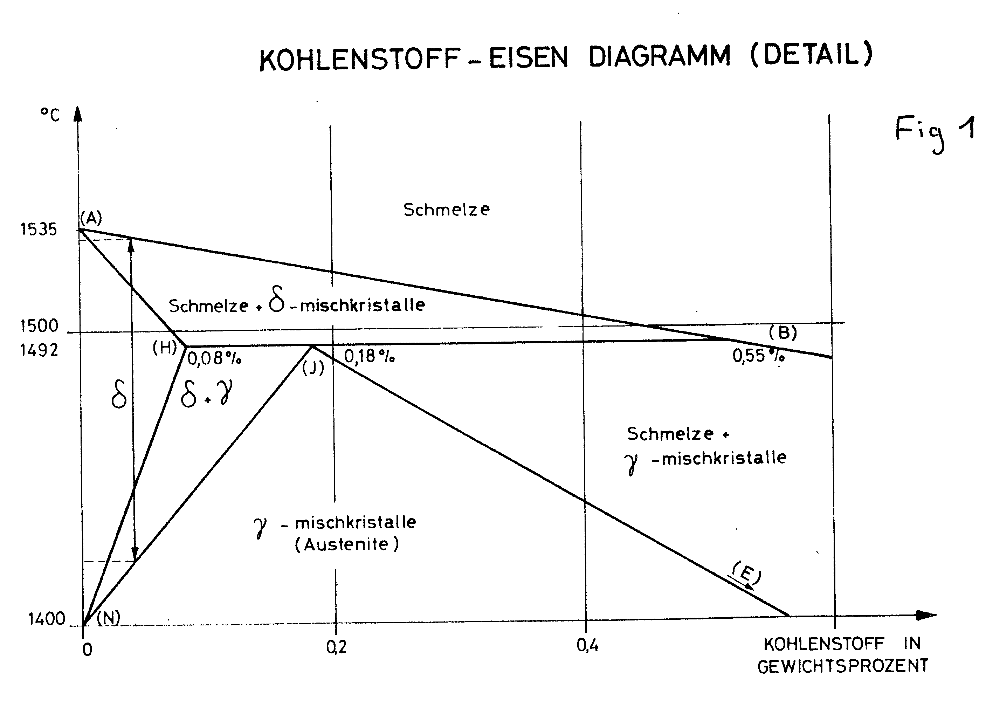

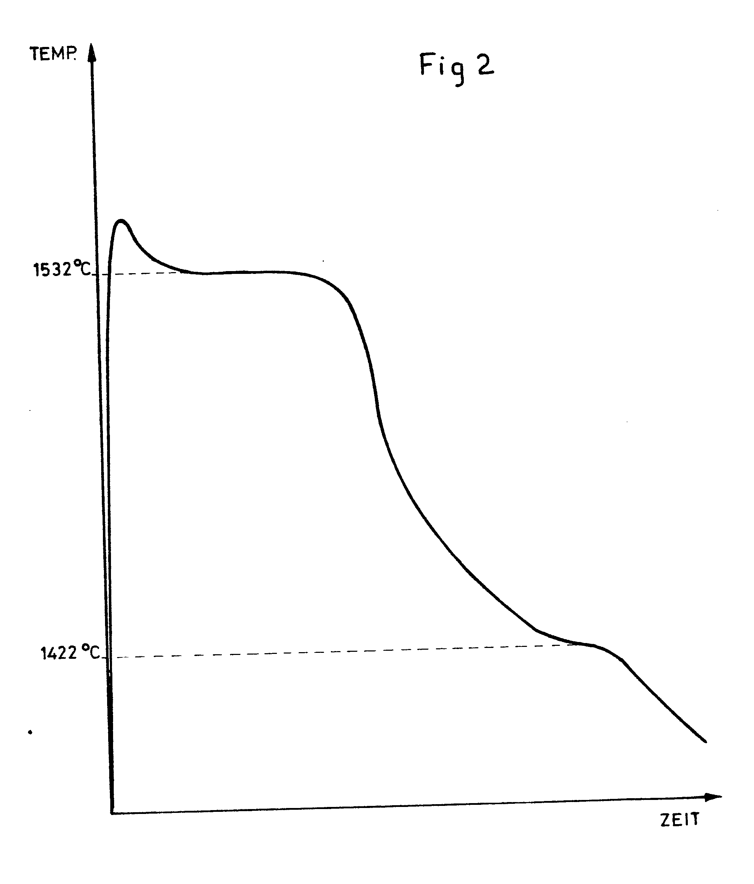

Aus einer Stahlschmelze wurde in üblicher Weise eine Probe entnommen und eine thermische Analyse durchgeführt. Bei der Abkühlung wurde das auf Figur 2 dargestellte Temperatur-Zeitschaubild ermittelt, das zwei deutliche Haltepunkte bei $1532^o$ und bei $1422^o$ C aufweist. Die Messung ist in dem Eisenkohlenstoffdiagramm gemäß Figur 1 angedeutet. Der erste Haltepunkt entspricht der Liquidustemperatur, der zweite Haltepunkt der Phasentransformation beim Durchlaufen der Linie NJ.

Da die Linien AB und NJ gerade Linien sind, die der Gleichung $y = ax + b$ gehorchen, lassen sich für die beiden ermittelten Haltepunkte die folgenden Gleichungen ableiten:

für die Liquidustemperatur
(Linie AB):
$$T_1 = -78,2 \cdot C + 1535 \quad (1)$$

für die Temperatur der Phasentransformation (Linie NJ):
$$T_t = 511 \cdot C + 1400 \quad (2)$$

für die Differenz
$$\Delta T = -589 \cdot C + 135 \quad (3).$$

- 4 -

Die Gleichung (3) stellt die Differenz zwischen den Gleichungen (1) und (2) dar. Sie entspricht dem theoretischen Zusammenhang zwischen der gemessenen Temperaturdifferenz ($\Delta T$) und dem Kohlenstoffgehalt (C).

Bei dem beschriebenen Ausführungsbeispiel ergibt sich eine Temperaturdifferenz von $\Delta T = 110^\circ$ C, aufgrund der gemessenen Haltepunkte. Wenn dieser Wert in die Gleichung (3) eingesetzt wird, ergibt sich für den Kohlenstoffgehalt:

$$C = \frac{25}{589} = 0{,}042 \ \%.$$

Es wurde bereits darauf hingewiesen, daß die Durchführung absoluter Messungen genau geeichte Meßinstrumente voraussetzt. Für das erfindungsgemäße Verfahren ist dies nicht notwendig, da es sich um Differenzmessungen handelt und die zwei Eichfehler sich aufheben.

Es ist ferner von Bedeutung, daß der Zusammenhang zwischen der gemessenen Temperatur $T_1$ und dem Kohlenstoffgehalt C bei der bekannten Methode durch die Gleichung (1) dargestellt wird, während der Zusammenhang zwischen der gemessenen Temperaturdifferenz $\Delta T$ und dem Kohlenstoffgehalt C durch die Gleichung (3) gegeben ist. Im erstgenannten Fall ist der Richtungskoeffizient -78,2, im zweiten Fall -589, so daß die Kohlenstoffbestimmung durch Messung der Temperaturdifferenz mit viel größerer Genauigkeit durchgeführt werden kann.

In der Praxis muß für die Kohlenstoffbestimmung aufgrund der Temperaturdifferenzmessungen eine Eichkurve aufgestellt werden, weil die registrierten Temperaturen nicht genau mit den theoretischen Werten übereinstimmen. Dies ist darauf zurückzuführen, daß die Probe unterkühlt wird und daß durch das Freiwerden der angesammelten Wärme die Kühlgeschwindigkeit herabgesetzt und ein deutlicher Knick verursacht wird. Die gemessenen Temperaturwerte sind also immer niedriger als die theoretischen, wobei diese Differenz insbesondere von der Kühlgeschwindigkeit, jedoch auch von der Größe der Probe, der Dicke der Kokillen usw. abhängt. Um das Verfahren unabhängig von diesen Bedingungen zu machen, wird eine Eichkurve aufgestellt. Dazu wird von jeder Probe, von der während der Erstarrung eine Temperaturdifferenzmessung durchgeführt wurde, der Kohlenstoffgehalt mit einer geeigneten Laboratoriumsanalyse bestimmt. Diese parallel durchgeführten Messungen werden als Punkte in ein Diagramm eingetragen, in dem die Temperaturdifferenz die Ordinate und der Kohlenstoff die Abszisse bildet.

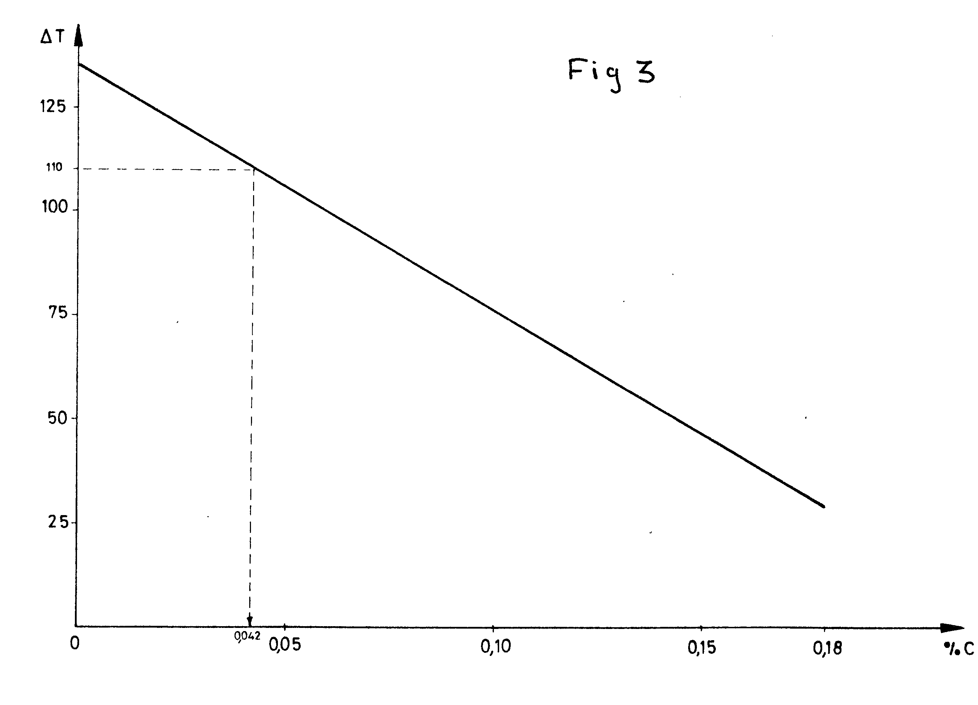

Eine derartige Eichkurve ist in Figur 3 zur Verdeutlichung des Ausführungsbeispiels dargestellt; ihr liegen die Werte der theoretischen Gleichung (3) zugrunde.

Mit einer auf diese Weise für eine bestimmte Meßsonde oder einen bestimmten Tiegel ermittelten Eichkurve läßt sich der Kohlenstoffgehalt durch die erfindungsgemäße Differenzmessung unabhängig von den absoluten Werten mit großer Genauigkeit ermitteln.

Ansprüche

1. Verfahren zur Bestimmung des Kohlenstoffgehaltes von Stahlschmelzen mittels einer thermischen Analyse durch Ermittlung der Temperatur-Haltepunkte, die beim Abkühlen der Schmelze im Bereich einer Phasenänderung oder Phasentransformation auftreten und in einer Abkühlkurve in Abhängigkeit von der Zeit ausgewertet werden, wobei der Haltepunkt im Zusammenhang mit dem Eisenkohlenstoffdiagramm einem bestimmten Kohlenstoffgehalt entspricht, d a - d u r c h   g e k e n n z e i c h n e t , daß die Temperaturdifferenz zwischen zwei Haltepunkten ermittelt wird, die bei der Liquidus-Phasenänderung und bei einer Phasentransformation oder bei zwei Phasentransformationen auftreten und daß die ermittelte Temperaturdifferenz zur Bestimmung des Kohlenstoffgehaltes im Zusammenhang mit dem Eisenkohlenstoffdiagramm benutzt wird.

2. Verfahren nach Anspruch 1, dadurch gekennzeichnet, daß bei Stählen mit einem Kohlenstoffgehalt bis zu 0,08 % die Differenz zwischen zwei der Linien AB, AH, NH und/oder NJ des Eisenkohlenstoffdiagramms bestimmt wird.

3. Verfahren nach Anspruch 1, dadurch gekennzeichnet, daß bei Stählen mit einem Kohlenstoffgehalt zwischen 0,08 und 0,18 % die Differenz zwischen den Linien AB, HJ, und/oder NJ des Eisenkohlenstoffdiagramms bestimmt wird.

4. Verfahren nach Anspruch 1, dadurch gekennzeichnet, daß bei Stählen mit einem Kohlenstoffgehalt über 0,18 % die Differenz zwischen den Linien AB, JB und/oder JE des Eisenkohlenstoffdiagramms bestimmt wird.

0037908

- 2 -

5. Verfahren nach den Ansprüchen 1 bis 4, dadurch gekennzeichnet, daß die Differenz zwischen zwei Linien des Eisenkohlenstoffdiagramms bestimmt wird, die in einem möglichst großen Winkel zueinander verlaufen.

# KOHLENSTOFF – EISEN DIAGRAMM (DETAIL)

Fig 1

°C

Schmelze

(A) 1535

Schmelze + $\delta$ -mischkristalle

1500

1492 (H) 0,08 %

(B)

(J) 0,18 %

0,55 %

$\delta$

$\delta$ + $\gamma$

Schmelze +
$\gamma$ -mischkristalle

$\gamma$ - mischkristalle
(Austenite)

(E)

1400 (N)

0          0,2          0,4          KOHLENSTOFF IN
GEWICHTSPROZENT

1/3

0037908

Fig 2

Fig 3

3/3

0037908

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 2 742 576 (KELLER SPE- ZIALTECHNIK-PYRO-WERK)  * Ansprüche; Figur 4 * | 1 |
| | US - A - 4 008 604 (M.P. ROACH)  * Zusammenfassung * | 1 |
| A | CA - A - 862 421 (C.V. GLADYSZ)  * Seite 5, Zeilen 2-24; Figur 1 * | 1 |
| A | US - A - 3 824 837 (N. NAGAOKA)  * Zusammenfassung * | 1 |
| A | DE - A - 1 798 074 (MANNESMANN)  * Seite 3 * | 1 |
| A | US - A - 3 766 772 (D.W. KERN)  * Zusammenfassung * | 1 |
| A | FR - A - 2 395 510 (INSTITUT KIBERNETIKI AKADEMII NAUK UKRAINSKOI SSR)  * Seite 1, Zeilen 1-17; Figur 6 * | 1 |

**KLASSIFIKATION DER ANMELDUNG (Int. Cl.)**

G 01 N 25/04

**RECHERCHIERTE SACHGEBIETE (Int. Cl.)**

G 01 N 25/04
33/20

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent- familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 10-07-1981 | CALLEWAERT-HAEZ |

EPA form 1503.1   06.78

BAD ORIGINAL